# EUROPÄISCHE PATENTSCHRIFT

(11) **EP 2 648 294 B1**
(45) Veröffentlichungstag und Bekanntmachung des Hinweises auf die Patenterteilung: **23.03.2016**
(21) Anmeldenummer: 12290123.4
(22) Anmeldetag: 05.04.2012
(51) Int. Cl.: H02B 13/045

(54) **Vorrichtung zum nachträglichen Abdichten eines mit Isoliergas befüllten Isolationsgehäuses der Hochspannungstechnik**
Device for subsequent sealing of a high voltage insulation housing filled with insulating gas
Dispositif d'étanchéification ultérieure d'un boîtier d'isolation rempli de gaz isolant dans la technologie haute tension

(43) Veröffentlichungstag der Anmeldung: 09.10.2013
(73) Patentinhaber: Siemens Aktiengesellschaft, 80333 München (DE)
(72) Erfinder: Gril, Yannis, 38620 Voissant (FR); Millet, Thierry, 38470 Viany (FR); Rouge, Philippe, 38320 Brie et Angon (FR)
(74) Vertreter: Fischer, Michael

(56) Entgegenhaltungen:
- US-A1- 2006 065 320
- US-A1- 2008 092 972

## Beschreibung

Die Erfindung betrifft eine Vorrichtung gemäß dem Oberbegriff des Anspruchs 1.

Die Erfindung betrifft ferner ein Verfahren zum Abdichten einer undichten Stelle eines mit Isoliergas befüllten Isolationsgehäuses gemäß Anspruch 10.

Eine Vorrichtung und ein Verfahren zum Abdichten undichter Stellen sind aus der WO 2005/111493 A1 bereits bekannt. Die dort beschriebene Vorrichtung ist zur Abdichtung rohrförmiger Isolationsgehäuse der Hochspannungstechnik vorgesehen, die mit einem Isolier- oder Schutzgas, wie Schwefelhexafluorid (SF6) befüllt sind. Hierzu weist die Vorrichtung ein haubenförmiges Innengehäuse auf, das mit seinen Abstützbereichen beidseitig der undichten Stelle mit dem Isolationsgehäuse verbunden wird. Ferner ist ein Außengehäuse vorgesehen, welches das Innengehäuse umschließt. Nach der Montage von Innen- und Außengehäuse wird der Raum zwischen Innen- und Außengehäuse über einen Einfüllstutzen mit einer polymerisierbaren Flüssigkeit befüllt und anschließend die Polymerisation in Gang gesetzt. Das so gebildete Polymer dichtet die undichte Stelle ab.

Aus der EP 0 794 379 A1 ist ebenfalls eine Vorrichtung zum Abdichten von leckgeschlagenen Isolationsgehäusen der Hochspannungstechnik bekannt. Die dort beschriebene Vorrichtung weist zwei in einer Querschnittsansicht halbkreisförmige Kragenabschnitte auf, die mit keilförmigen Dichtmitteln ausgerüstet sind. Die halbkreisförmigen Kragenabschnitte sind formkomplementär zu dem rohrförmigen mit Schwefelhexafluorid befüllten Isolationsgehäuse ausgebildet. Die Kragenabschnitte werden mit ihren Dichtmitteln so auf das rohrförmige Isolationsgehäuse aufgesetzt und verspannt, dass aufgrund der keilförmigen Ausgestaltung der Dichtmittel eine hohe Dichtwirkung bereitgestellt ist.

Die EP 0 194 034 und die GB 2 119 893 A beschreiben ebenfalls eine Vorrichtung zum Abdichten eines rohrförmigen gasisolierten Isolationsgehäuses, wobei die Vorrichtungen jeweils im Querschnitt halbkreisförmige Kragenabschnitte aufweisen, die an das rohrförmige Isolationsgehäuse angelegt und anschließend miteinander verspannt werden. Dabei weisen die halbkreis- oder halbringförmigen Klemmabschnitte Dichtmittel auf, die beim Festspannen dichtend gegen das Isolationsgehäuse gepresst werden.

Gasisolierte Anlagen (GIS-Anlagen) der Hochspannungstechnik weisen üblicherweise ein Kapselungs- oder Isolationsgehäuse auf, in dem die mit Hochspannung beaufschlagten Aktivbauteile der GIS-Anlage angeordnet sind. Das Isolationsgehäuse ist in der Regel mit Schwefelhexafluorid als Schutzgas befüllt, das mit Druck beaufschlagt ist. Aufgrund des im Vergleich zur Atmosphärenluft hohen Isolationsvermögens von Schwefelhexafluorid unter Druck können GIS-Anlagen kompakter gebaut werden als vergleichbare luftisolierte Anlagen. Das zur Kapselung des Isoliergases dienende Isolationsgehäuse wird in der Regel wartungsfrei ausgestaltet. GIS-Anlagen mit solchen Isolationsgehäusen weisen eine maximale Lebensdauer von 25 bis 30 Jahren auf. Bereits nach 20 bis 25 Jahren kommt es jedoch oftmals zu einer nachlassende Dichtwirkung der Dichtungen, die beim Zusammenbau der gasisolierten Anlage eingesetzt wurden. Da Schwefelhexafluorid als umweltschädigend eingestuft wird, müssen solche Leckagen oft nachträglich abgedichtet werden. Der Austausch der Dichtungen von gasisolierten Hochspannungsanlagen ist jedoch aufwändig und mit einem Ausfall der gesamten Anlage über einen langen Zeitraum verknüpft.

Die oben beschriebenen Vorrichtungen ermöglichen zwar Leckagestellen gegenüber der Außenatmosphäre nachträglich abzudichten, ohne dass der Betrieb der GIS-Anlage langfristig unterbrochen werden muss. Sie verhindern jedoch nicht, dass Schwefelhexafluorid aus dem Isolationsgehäuse in den durch die Vorrichtung und dem Isolationsgasgehäuse begrenzten Gasraum austritt. Dies setzt zum einen den Innendruck des Schwefelhexafluorids im Isolationsgasgehäuse herab. Dieser Druckabfall setzt das Isolationsvermögen des Isoliergases im Isolationsgehäuse herab. Darüber hinaus ist es nahezu unmöglich geworden, das in diesem Gasraum befindliche Schwefelhexafluorid bei endgültiger Demontage der GIS-Anlage umweltfreundlich zu entsorgen.

Ferner ist aus der US 2006/065320 A1 eine Vorrichtung zum Abdichten eines Lecks in einer Pipeline bekannt, die als eine zylindrische Manschette zum direkten Anlegen auf ein Leck in einer an sich glatten, zylindrischen Pipeline ausgebildet ist.

Aus der US 2008092972 A1 ist eine gattungsgemäße Vorrichtung bekannt, bei der eine Abdichtung einer Flanschverbindung durch ein zwischen zwei Abdeckhauben aushärtendes Polymer erreicht wird.

Aufgabe der Erfindung ist es daher, ausgehend von der US 2008/092972 A1 eine Vorrichtung bereitzustellen, bei der möglichst wenig Isoliergas aus dem Isolationsgehäuse austritt.

Die Erfindung löst diese Aufgabe - ausgehend von der eingangs genannten Vorrichtung - durch eine Vorrichtung gemäß Anspruch 1.

Erfindungsgemäß ist eine Vorrichtung vorgesehen, die an einem beliebigen Isolationsgehäuse mit Hilfe von Klemmmitteln verspannt werden kann. Die Vorrichtung weist eine Abdeckhaube auf, die mit ihren Abstützbereichen auf dem Isolationsgehäuse abgestützt werden kann. Dabei sind in den Abstützbereichen Dichtmittel vorgesehen. Durch das Verklemmen der Abdeckhaube mit Hilfe der Klemmmittel werden die Abstützbereiche der Abdeckhaube gegen den Außenmantel des Isolationsgehäuses gepresst, wodurch die Dichtmittel elastisch verformt werden. Hierdurch entfaltet sich die gewünschte Dichtwirkung. Zwischen der Abdeckhaube und dem Isolationsgehäuse ist daher ein abgedichteter Gasraum bereitgestellt. Das Gaseinfüllventil ist so in der Abdeckhaube angeordnet, dass dieses mit einer Seite in den besagten Gasraum mündet. Dabei erstreckt sich das Gaseinfüllventil durch die Abdeckhaube hindurch, so dass eine weitere Seite des Gaseinfüllventils in der Außenatmosphäre angeordnet ist. Von Außen kann daher das Gaseinfüllventil mit einem weiteren Gegendruckgas befüllt werden. Das Gegendruckgäs ist mit einem Druck beaufschlagbar, so dass der Austritt von Isoliergas, wie Schwefelhexafluorid, aus dem Isolationsgehäuse weitestgehend unterdrückt werden kann. Das Gegendruckgas ist vorteilhafterweise ein weitgehend reaktionsarmes, also inertes Gas, das jedoch umweltverträglich ist. Hier bietet sich beispielsweise Stickstoff an. Selbstverständlich können auch Edelgase oder dergleichen eingesetzt werden, die jedoch im Vergleich zu Stickstoff teuer sind. Aufgrund des gegenüber den Vorrichtungen des Standes der Technik erhöhten Gasdruckes in dem Gasraum zwischen Abdeckhaube und Isolationsgehäuse ist die Druckdifferenz zwischen dem Innendruck des Isolationsgehäuses und dem Gasraum einstellbar. Dies verringert den Austritt von Schwefelhexafluorid aus dem Isolationsgehäuse.

Zweckmäßigerweise ist der Druck des Gegendruckgases in dem Gasraum etwas geringer als der Druck des Isoliergases im Isolationsgehäuse. Aufgrund dieser Variante des erfindungsgemäßen Verfahrens ist sichergestellt, dass das Gegendruckgas nicht in das Isolationsgehäuse eindringt und die dort bereitgestellte Isolationswirkung nachteilig beeinflusst.

Vorteilhafterweise wird das Gegendruckgas mit einem Druck beaufschlagt, der gleich einem Alarmdruck des Isolationsgehäuses ist. Der Alarmdruck eines Isolationsgehäuses ist der Druck, bei dem die Funktionstüchtigkeit einer GIS-Anlage, in der das Isolationsgehäuse integriert ist, so weit beeinträchtigt ist, dass die GIS-Anlage abgestellt werden muss. Fällt das Isoliergas im Inneren des Isolationsgehäuses auf den Alarmdruck ab, kommt es zum Abschalten der gesamten Anlage. Ist das Gegendruckgas mit diesem Alarmdruck beaufschlagt, wird sichergestellt, dass der Druck eines Isoliergases wie Schwefelhexafluorid im Inneren des Isolationsgehäuses immer größer ist als der Druck des Gegendruckgases. Das Gegendruckgas dringt daher nicht in das Isolationsgehäuse ein.

Zweckmäßigerweise ist die Abdeckhaube umfänglich geschlossen ausgebildet. Ist das Isolationsgehäuse beispielsweise ein rohrförmiges Isolationsgehäuse, weist auch die Abdeckhaube im zusammengebauten Zustand zumindest abschnittsweise eine ringförmig geschlossene Kontur auf. Die Abdeckhaube wird mit ihren ringförmigen Abschnitten wie ein Kragen an das rohrförmige Isolationsgehäuse angelegt und anschließend mittels der Spannmittel verspannt. Beim Verspannen wird die Abdeckhaube gegen die der Außenatmosphäre zugewandte Außenfläche des Isolationsgehäuses gepresst, so dass eine Klemmkraft über die Abstützbereiche in die Dichtmittel eingeleitet wird. Bei eckigen, beispielsweise würfel- oder quaderförmigen, Isolationsgehäusen ist die Abdeckhaube in ihren Abstützbereichen kastenförmig ausgebildet und umschließt im angebauten Zustand das würfel- oder quaderförmige Isolationsgehäuse umfänglich. In jedem Falle ist die Abdeckhaube an die Geometrie des Isolationsgehäuses so angepasst, dass die Abdeckhaube umfänglich geschlossen an das Isolationsgehäuse angesetzt werden kann und nach dem Verspannen dichtend an dem Isolationsgehäuse anliegt.

Vorteilhafterweise weist die Abdeckhaube wenigstens zwei miteinander verspannbare Abdeckabschnitte auf, wobei die Dichtmittel sich teilweise auch zwischen den Abdeckhaubenabschnitten erstrecken. Gemäß dieser vorteilhaften Weiterentwicklung ist die Abdeckhaube aus mehreren Abdeckhaubenabschnitten zusammengesetzt. Mit anderen Worten ist die Abdeckhaube mehrteilig ausgebildet. Das vereinfacht die Montage und die Demontage der erfindungsgemäßen Vorrichtung.

Gemäß einer bevorzugten Ausführung der Erfindung sind die Abstützbereiche an zwei einander gegenüberliegenden Befestigungsseiten der Abdeckhaube ausgebildet, wobei die Abdeckhaube an jeder der besagten Befestigungsseiten mit einem Seitenflansch über Befestigungsmittel verbunden ist, so dass die räumliche Ausdehnung der in den Abstützbereichen angeordneten Dichtmittel durch den jeweiligen Seitenflansch begrenzt ist. Der Seitenflansch begrenzt die Verformung der Dichtmittel und unterstützt somit die dichtende Montage der Abdeckhaube an dem Isolationsgehäuse.

Zweckmäßigerweise begrenzen die Abstützbereiche jeweils eine kreisförmige Kontur, wobei an die Abstützbereiche ein im Querschnitt haubenartiger Abdeckabschnitt angeformt ist. Mit anderen Worten besteht die Abdeckhaube aus Befestigungsseiten, an denen Abstützbereiche ausgebildet sind, und aus einem im Querschnitt haubenartigen Abdeckabschnitt. Dabei ist die Abdeckhaube zweckmäßigerweise einstückig ausgebildet.

Die Abstützbereiche sind zweckmäßigerweise an eine rohrförmige Ausgestaltung des Isolationsgehäuses angepasst und liegen aufgrund ihrer kreisförmigen inneren Kontur formschlüssig an dem rohrförmigen Isolationsgehäuse an. Der konkav ausgebildete und im Querschnitt haubenartige Abdeckabschnitt umschließt bei Betrieb der erfindungsgemäßen Vorrichtung die leckgeschlagene Stelle des Isolationsgehäuses, beispielsweise eine Flanschverbindung, wobei die konkave oder domförmige Auswölbung so ausgebildet ist, dass der aus der rohrförmigen Grundstruktur des Isolationsgehäuses aufragende Bereiche oder Öffnungen von dem im Querschnitt haubenartigen Abdeckabschnitt umschlossen sind, wobei der dichtende Klemmsitz mittels der Abstützbereiche erfolgt.

Zweckmäßigerweise ist durch die Befestigungsmittel der Abstand zwischen dem Seitenflansch und den Befestigungsseiten einstellbar. Auf diese Weise ist selbstverständlich auch der Abstand zwischen den Abstützbereichen und dem Seitenflansch einstellbar. Durch die Befestigungsmittel ist es daher möglich, nicht nur die seitliche Ausdehnung der Dichtmittel in den Abstützbereichen zu begrenzen, sondern darüber hinaus auch eine gegebenenfalls notwendige zusätzliche Verformung der Dichtmittel im angebauten Zustand der Vorrichtung herbeizuführen. Hierbei wird zunächst die Abdeckhaube an dem Isolationsgehäuse verspannt, so dass die Dichtmittel zwischen Abstützbereichen und dem Isolationsgehäuse verklemmt sind. Durch eine Verkleinerung des Abstandes zwischen Seitenflansch und Befestigungsseite werden die Dichtmittel noch weiter zwischen die Abstützbereiche und die Außenkontur des Isolatiorisgehäuses gedrängt, wodurch sich die Dichtwirkung erhöht. Durch diese nachträgliche Justage der Seitenflansche können Unebenheiten des Isolationsgehäuses nachträglich auf bequeme Art und Weise ausgeglichen werden.

Gemäß einer bevorzugten Ausgestaltung der Erfindung sind die in den Abstützbereichen der Abdeckhaube angeordneten Dichtmittel in einer Querschnittsansicht keilförmig ausgebildet, wobei sie sich zu ihrer von dem Seitenflansch abgewandten Seite hin verjüngen. Aufgrund dieser keilförmigen Ausgestaltung wird die Dichtwirkung noch weiter erhöht.

Zweckmäßigerweise sind die Abstützbereiche formkomplementär zu den ihn angeordneten Dichtmitteln ausgebildet. Sind die Dichtmittel beispielsweise im Querschnitt keilförmig ausgebildet, weisen auch die Abstützbereiche in einer Querschnittsansicht eine abgeschrägte Kontur auf, so dass diese auf den abgeschrägten Keilflächen flächig aufliegen. Hierdurch wird die Dichtwirkung ebenfalls noch weiter erhöht.

Gemäß einer weiteren zweckmäßigen Ausgestaltung der Erfindung sind die Klemmmittel als Klemmflansche realisiert, die an Abdeckhaubenabschnitten der Abdeckhaube vorgesehen sind. Die Klemmflansche können miteinander verspannt werden, wobei sich Dichtmittel zwischen ihnen erstrecken. Die Abdeckhaubenabschnitte können daher an das Isolationsgehäuse angelegt werden. Anschließend kommt es durch Verschrauben der Klemmflansche zu einer umfänglich geschlossenen Konfiguration der Abdeckhaube, wobei ein Anpressdruck zwischen den Abstützbereichen und dem Isolationsgehäuse erzeugbar ist, durch den die in den Abstützbereichen angeordneten Dichtmittel gegen den Außenmantel des Isolationsgehäuses gepresst werden.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: eine perspektivische Darstellung eines Ausführungsbeispiels der erfindungsgemäßen Vorrichtung nach erfolgter Montage an ein Isolationsgehäuse,
- Figur 2: eine geschnittene Ansicht der Vorrichtung gemäß Figur 1,
- Figur 3: eine perspektivische Ansicht einer Vorrichtung gemäß Figur 1,
- Figur 4: ein weiteres Ausführungsbeispiel der erfindungsgemäßen Vorrichtung in perspektivischer Ansicht,
- Figur 5: ein weiteres Ausführungsbeispiel der Erfindung in einer quergeschnittenen Ansicht,
- Figur 6: ein weiteres Ausführungsbeispiel der erfindungsgemäßen Vorrichtung in einer quergeschnittenen Ansicht,
- Figur 7: ein weiteres Ausführungsbeispiel der erfindungsgemäßen Vorrichtung in einer quergeschnittenen Ansicht und
- Figur 8: ein weiteres Ausführungsbeispiel der erfindungsgemäßen Vorrichtung in einer quergeschnittenen Ansicht zeigen.

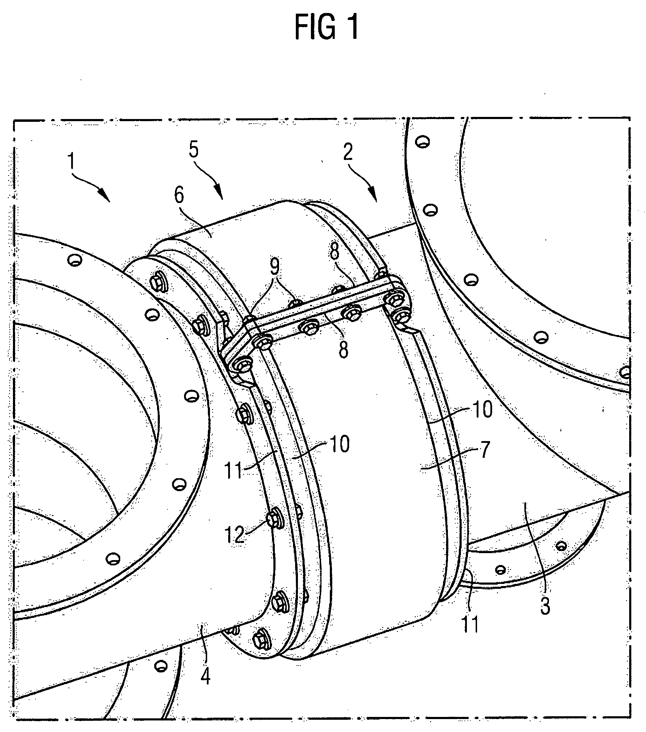

Figur 1 zeigt ein Ausführungsbeispiel der erfindungsgemäßen Vorrichtung 1 in einer perspektivischen Ansicht, in welcher die Vorrichtung 1 an einem Isolationsgehäuse 2 fest montiert ist. Das Isolationsgehäuse 2 ist zumindest teilweise rohrförmig ausgebildet und weist zwei Isolationsgehäuseabschnitte 3 und 4 auf, welche über eine durch die Vorrichtung 1 verdeckte Flanschverbindung miteinander verbunden sind. Das Isolationsgehäuse 2 ist in Figur 1 offen gezeigt. Es dient jedoch in der Praxis zur Kapselung von mit Hochspannung beaufschlagten Bauteilen und ist mit einem Schutz- oder Isolationsgas befüllt, das in der Regel Schwefelhexafluorid ist. Schwefelhexafluorid wird jedoch als umweltschädigendes Gas eingestuft, so dass der Austritt von Schwefelhexafluorid aus dem Isolationsgehäuse 2 vermieden werden muss. Wie bereits in der Einleitung ausgeführt wurde, bilden unter diesem Gesichtspunkt die Dichtungen zwischen den Isolationsgehäuseabschnitten 3 und 4 kritische Bereiche aus. Insbesondere nach zwischen 20 und 25 Jahren kommt es oft zu einem Abfall der Dichtwirkung mit Austritt von Schwefelhexafluorid in die Atmosphäre im Gefolge. Die Vorrichtung 1 dient zur schnellen und kostengünstigen Abdichtung dieser Leckagestelle, ohne dass das Isolationsgehäuse geöffnet und der Betrieb einer GIS-Anlage unterbrochen werden muss.

Die Vorrichtung 1 besteht aus einer Abdeckhaube 5, die aus zwei Abdeckhaubenabschnitten 6 und 7 zusammengesetzt ist. Die Abdeckhaubenabschnitte 6 und 7 weisen jeweils einen Klemmflansch 8 auf, wobei die Klemmflansche 8 durch eine Schraubverbindung 9 miteinander verbunden sind. Durch die Klemmflansche 8 und die Schraubverbindungen 9 sind somit Klemmmittel realisiert, mit denen die Abdeckhaube und somit die gesamte Vorrichtung 1 an dem Isolationsgehäuse 2 verklemmt ist. Die Abdeckhaube 5 beziehungsweise die Abdeckhaubenabschnitte 6 und 7 weisen jeweils zwei einander gegenüberliegende Befestigungsseiten 10 auf, an denen jeweils ein Seitenflansch 11 über Befestigungsmittel 12 angebracht ist. Die Befestigungsmittel 12 sind als Schraubverbindungen realisiert, mit denen der Abstand zwischen den Befestigungsseiten 10 der Abdeckhaubenabschnitte 6 und 7 und dem Seitenflansch 11 variiert werden kann.

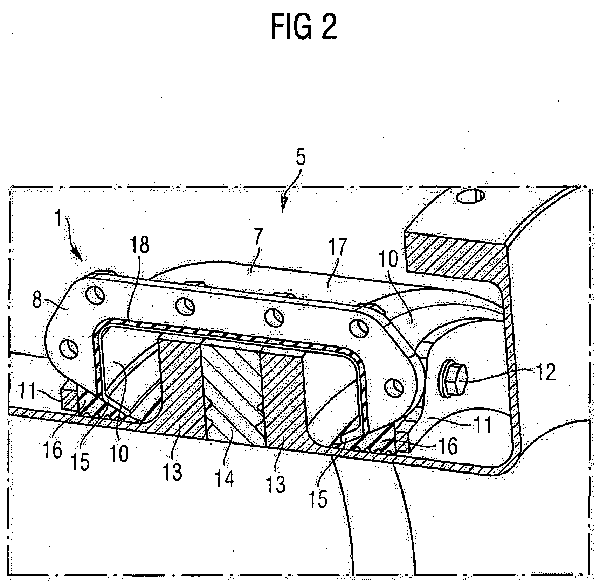

Figur 2 zeigt die Vorrichtung 1 gemäß Figur 1 in einer teilweise geschnittenen Ansicht. In dieser Ansicht sind die Isolationsgehäusenflansche 13 mit einer zwischen ihnen angeordneten undicht gewordenen Dichtung 14 erkennbar. Ferner ist die Ausgestaltung der Abdeckhaube 5 genauer verdeutlicht. Insbesondere ist erkennbar, dass die Abdeckhaube 5 an ihren Befestigungsseiten 10 jeweils einen Abstützbereich 15 ausbildet, in dem Dichtmittel 16 angeordnet sind, die in der gezeigten Querschnittsansicht keilförmig ausgestaltet sind. Die in den Abstützbereichen 15 angeordneten Dichtmittel 16 liegen mit einer Seite an dem Seitenflansch 11 an, der eine weitere Ausdehnung der Dichtmittel 16, beispielsweise durch elastische Verformung, begrenzt. An die Befestigungsseiten 10 ist ein im Querschnitt haubenartiger Abdeckhaubenabschnitt 17 angeformt, welcher die Isolationsgehäusenflansche 13 sowie das undichte Dichtmittel 14 überragt. Weiterhin ist erkennbar, dass der Abdeckhaubenabschnitt 7 an seinem Klemmflansch 8 mit einer Haubendichtung 18 ausgerüstet ist, so dass beim Verklemmen der Abdeckhaubenabschnitte 6 beziehungsweise 7 zwischen ihnen eine Dichtwirkung bereitgestellt ist.

In der Ansicht gemäß Figur 2 ist ferner erkennbar, dass nach dem Verbinden der Abdeckhaubenabschnitte 6 und 7 an ihren Klemmflanschen 8 ein Klemmsitz der Abdeckhaube 5 an dem Gehäuse 2 bereitgestellt ist, wobei die Abstützbereiche 15 beidseitig der abzudichtenden Stelle des Isolationsgehäuses 2 angeordnet sind. Mit den Befestigungsmitteln 12 kann der Abstand zwischen dem Seitenflansch 11 und der Befestigungsseite 10 variiert werden, wodurch die in dieser gezeigten Querschnittsansicht keilförmig ausgebildeten Dichtmittel 16 stärker gegen die Abstützbereiche 15 der Abdeckhaube 5 gepresst werden. Die Abstützbereiche 15 sind hierbei formkomplementär zu den Dichtmitteln 16 ausgestaltet, so dass es zu einem stärkeren Verpressen der Dichtmittel 16 zwischen diesen Bauteilen und somit zu einer erhöhten Dichtwirkung kommt. Mit anderen Worten kann die Dichtwirkung der in den Abstützbereichen 15 angeordneten Dichtmittel 16 durch Verstellen der Befestigungsmittel 12 erhöht oder herabgesetzt werden, so dass Dellen, Auswülstungen oder dergleichen des Isolationsgehäuses 2 auch nach Anbringen der Abdeckhaube 5 an dem Isolationsgehäuse 2 ausgeglichen werden können.

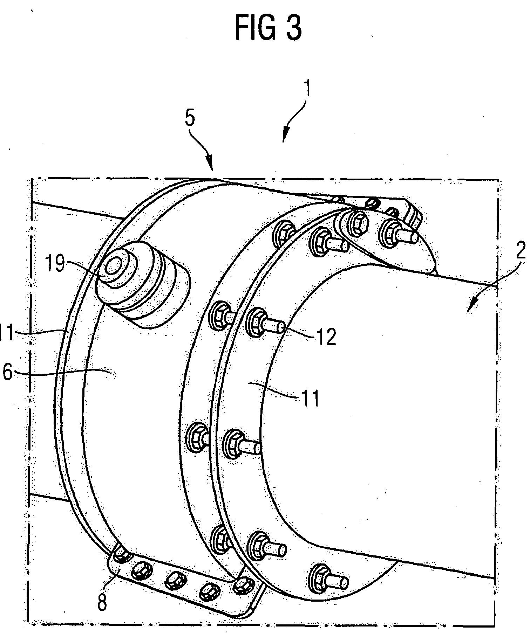

Figur 3 zeigt eine weitere perspektivische Ansicht der erfindungsgemäßen Vorrichtung 1 im zusammengebauten Zustand, in der wieder das Isolationsgehäuse 2 erkennbar ist, dessen Flanschverbindung von der erfindungsgemäßen Vorrichtung 1 verdeckt ist. Insbesondere ist erkennbar, dass die Abdeckhaube 5 an einem ihrer Abdeckhaubenabschnitte 6 mit einem Gaseinfüllventil 19 ausgerüstet ist, das sich durch die Abdeckhaube 5 hindurch erstreckt und in einen von dem Isolationsgehäuse 2 und der Abdeckhaube 5 begrenzten Gasraum hinein mündet. In dem in den Figuren 1 und 3 gezeigten Ausführungsbeispielen ist der besagte Gasraum mit Stickstoff als Gegendruckgas befüllt, der einen Druck aufweist, der dem Alarmdruck einer GIS-Anlage mit dem Isolationsgehäuse 2 entspricht. Wie bereits ausgeführt wurde, ist der Alarmdruck der Druck, bei dem der Betrieb einer GIS-Anlage mit dem Isolationsgehäuse 2 abgebrochen werden muss. Auf diese Weise ist sichergestellt, dass der Druck des Isoliergases im Isolationsgehäuse 2 während des Betriebs immer größer ist als der Druck in den von der Vorrichtung 1 und dem Isolationsgehäuse 2 begrenzten Gasraum. Der Eintritt von Stickstoff in das Innere des Isolationsgehäuses 2 mit einer unerwünschten Beeinflussung der elektrischen Festigkeit im Gefolge ist somit vermieden.

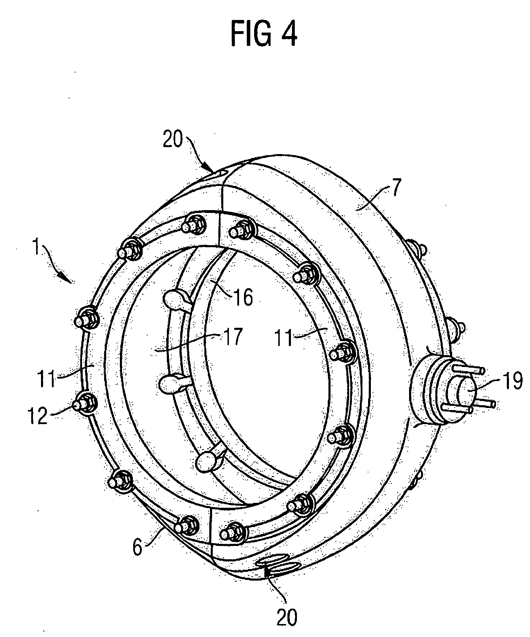

Figur 4 zeigt ein weiteres Ausführungsbeispiel der erfindungsgemäßen Vorrichtung 1, das sich von dem in den Figuren 1 und 3 gezeigten Ausführungsbeispielen lediglich durch die Ausgestaltung der Abdeckhaube und deren Befestigungsmittel unterscheidet. Insbesondere weist die Abdeckhaube 5 keine sichtbaren Klemmflansche mehr auf. Vielmehr sind die Klemmmittel in die Kontur der Abdeckhaube 5 integriert. Lediglich Ausnehmungen 20 sind erkennbar, in denen zweckmäßige Schrauben einführbar sind, mit denen der Abdeckhaubenabschnitt 6 an dem Abdeckhaubenabschnitt 7 befestigt und verspannbar ist. Hierzu dienen auch in dem Abdeckhaubenabschnitt 7 figürlich nicht dargestellte Verbindungsbohrungen, die mit einem zweckmäßigen Innengewinde ausgestattet sind. Die Schrauben weisen ein passendes Außengewinde auf, mit sie in dem Abdeckhaubenabschnitt 6 vorgesehene Durchgangsbohrungen durchragen.

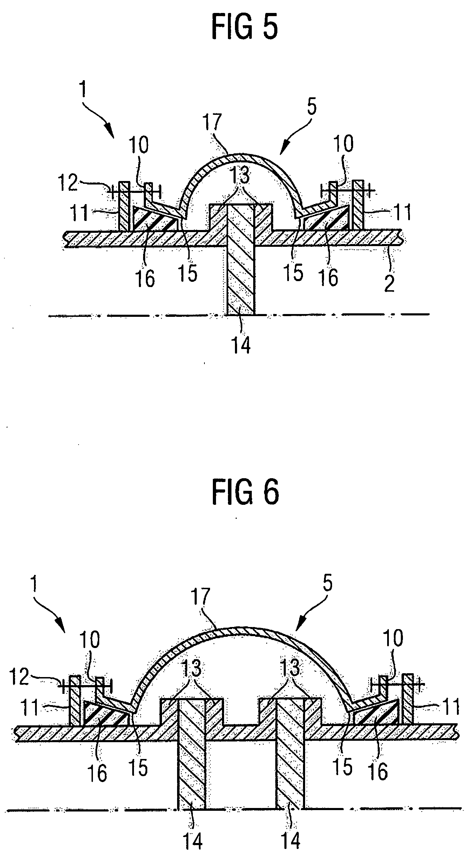

Die Figuren 5 bis 8 zeigen schematisch verschiedene geometrische Ausgestaltungen der Abdeckhaube 5. Insbesondere ist die Wirkung der Befestigungsseite 10 der Abdeckhaube 5 verdeutlicht. So ist dargestellt, dass der Abstand zwischen der Befestigungsseite 10 und dem Seitenflansch 11 durch die Befestigungsmittel 12 variabel eingestellt werden kann, so dass die Klemmwirkung an den keilförmigen Dichtungsmitteln 16 in den Abstützbereichen 15 erhöht oder herabgesetzt werden kann. Dies erfolgt bei allen Ausgestaltungen der Figuren 5 bis 8 jeweils beidseitig an den Abstützbereichen 15, die bei allen gezeigten Varianten der Erfindung eine kreisförmige Kontur begrenzen. Die geometrische Ausgestaltung des Abdeckabschnitts 17, der sich zwischen den Befestigungsseiten 10 erstreckt, ist jedoch je nach Anforderung unterschiedlich.

In Figur 5 überragt der Abdeckabschnitt 17 lediglich eine Flanschverbindung 13, 14 des Isolationsgehäuses 2, während dieser gemäß der Ausgestaltung in Figur 6 vergrößert ist, so dass der im Querschnitt konkav gewölbte Abdeckabschnitt 17 zwei Flanschverbindungen 13, 14 des Isolationsgehäuses 2 überragt.

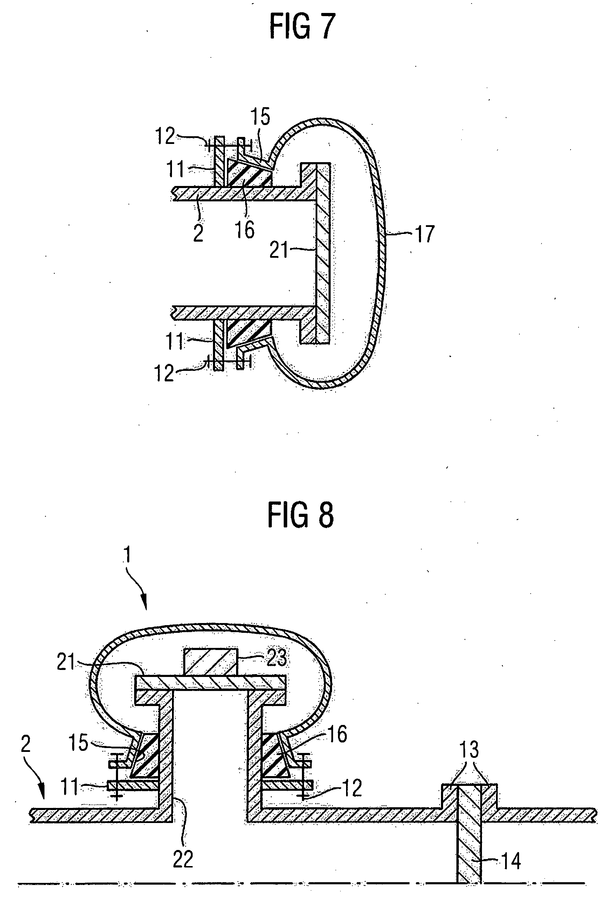

Figur 7 zeigt eine Ausgestaltung nicht Teil der Erfindung, die zur Abdichtung der Stirnseite eines rohrförmigen Isolationsgehäuses 5 dient. Die Stirnseite ist durch eine Abdeckplatte 21 gasdicht verschlossen. Die Abdeckabschnitt 17 ist so ausgestattet, dass sie die gesamte Abdeckplatte 21 überragt. Die Abstützbereiche 15 bleiben an dem rohrförmigen Abschnitt des Isolationsgehäuses 5 abgestützt.

Figur 8 zeigt eine Ausgestaltung nicht Teil der Erfindung, die zur Montage an einem Seitenstutzen 22 des Isolationsgehäuse 2 dient, wobei der Seitenstutzen 22 mit einer Abdeckplatte 21 ausgerüstet ist, auf der ein Zusatzbauteil 23 vorgesehen ist. Der Abdeckabschnitt 17 ist so ausgestaltet, dass dieser sowohl die Abdeckplatte 21 als auch das Zusatzbauteil 23 umschließt, so dass die undichte Stelle zwingend in den Gasraum mündet, der von dem Abdeckabschnitt 17 einerseits sowie dem Isolationsgehäuse 2 andererseits begrenzt ist.

## Patentansprüche

1. Vorrichtung (1) zum nachträglichen Abdichten einer Flanschverbindung zweier Isolationsgehäuseabschnitte eines mit Isoliergas befüllten Isolationsgehäuses (2) der Hochspannungstechnik mit
- einer zum Aufsetzen auf die Flanschverbindung des Isolationsgehäuses (2) vorgesehenen Abdeckhaube (5), die neben der Flanschverbindung Abstützbereiche (15) ausbildet, mit denen die aufgesetzte Abdeckhaube (5) an dem Isolationsgehäuse (2) abgestützt ist,
- an den Abstützbereichen (15) angeordneten Dichtmitteln (16),
**dadurch gekennzeichnet, dass**
- Klemmmittel (8,9) zum Verklemmen der Abdeckhaube (5) an dem Isolationsgehäuse (2) vorgesehen sind, so dass ein gasdichter Klemmsitz bereitgestellt ist; und dass
- die Abdeckhaube (5) ein Gaseinfüllventil (19) aufweist, mit dem ein von dem Isolationsgehäuse (2) und der Abdeckhaube (5) begrenzter abgedichteter Gasraum mit einem Gegendruckgas befüllbar ist.

2. Vorrichtung (1) nach Anspruch 1,
**dadurch gekennzeichnet, dass**
die Abdeckhaube (5) umfänglich geschlossen ausgebildet ist.

3. Vorrichtung (1) nach Anspruch 2,
**dadurch gekennzeichnet, dass**
die Abdeckhaube (5) wenigstens zwei miteinander verspannbare Abdeckhaubenabschnitte (6,7) aufweist, wobei die Dichtmittel (16) sich teilweise auch zwischen den Abdeckhaubenabschnitten (6,7) erstrecken.

4. Vorrichtung (1) nach einem der vorhergehenden Ansprüche,
**dadurch gekennzeichnet, dass**
die Abstützbereiche (15) an zwei einander gegenüberliegenden Befestigungsseiten (10) der Abdeckhaube (5) ausgebildet sind und die Abdeckhaube (5) an jeder der besagten Befestigungsseiten (10) mit einem Seitenflanschen (11) über Befestigungsmittel (12) verbunden ist, so dass die räumliche Ausdehnung der in den Abstützbereichen (15) angeordneten Dichtmittel (16) durch den jeweiligen Seitenflansch (11) begrenzt ist.

5. Vorrichtung (1) nach Anspruch 4,
**dadurch gekennzeichnet, dass**
die Abstützbereiche (15) der Befestigungsseiten (10) jeweils eine kreisförmige Kontur begrenzen, wobei an die Befestigungsseiten (10) ein im Querschnitt haubenartiger Abdeckabschnitt (17) angeformt ist.

6. Vorrichtung (1) nach Anspruch 4 oder 5,
**dadurch gekennzeichnet, dass**
durch die Befestigungsmittel (12) der Abstand zwischen dem Seitenflansch (11) und der Befestigungsseite (10) einstellbar ist.

7. Vorrichtung (1) nach einem der Ansprüche 4 bis 6,
**dadurch gekennzeichnet, dass**
die in den Abstützbereichen (15) der Abdeckhaube (5) angeordneten Dichtmittel (16) in einer Querschnittsansicht keilförmig ausgebildet sind und sich zu ihrer von dem Seitenflansch (11) abgewandten Seite hin verjüngen.

8. Vorrichtung (1) nach einem der vorhergehenden Ansprüche,
**dadurch gekennzeichnet, dass**
die Abstützbereiche (15) formkomplementär zu den in ihnen angeordneten Dichtmitteln (16) ausgebildet sind.

9. Vorrichtung (1) nach einem der vorhergehenden Ansprüche,
**dadurch gekennzeichnet, dass**
die Klemmmittel an Abdeckhaubenabschnitten (6,7) der Abdeckhaube (5) ausgebildete Klemmflansche (8) sind, so dass die Abdeckhaubenabschnitte (6,7) durch die Klemmflansche (8) miteinander verspannbar sind.

10. Verfahren zum nachträglichen Abdichten einer undichten Stelle (14) einer Flanschverbindung zweier Isolationsgehäuseabschnitte eines mit Isoliergas befüllten Isolationsgehäuses (2) der Hochspannungstechnik, bei dem eine Vorrichtung gemäß einem der Ansprüche 1 bis 9 mit ihrem Klemmmittel (8,9) an dem Isolationsgehäuse (2) gasdicht befestigt wird, so dass zwischen dem Isolationsgehäuse (2) und der Abdeckhaube (5) ein Gasraum ausgebildet wird und der Gasraum anschließend über ein in der Abdeckhaube (5) vorgesehenes Gaseinfüllventil (19) mit einem Gegendruckgas befüllt wird.

11. Verfahren nach Anspruch 10,
**dadurch gekennzeichnet, dass**
das Gegendruckgas mit einem Druck beaufschlagt wird, der geringer ist als der Druck des Isoliergases.

12. Verfahren nach Anspruch 11,
**dadurch gekennzeichnet, dass**
das Gegendruckgas mit einem Druck beaufschlagt wird, der gleich einem Alarmdruck des Isolationsgehäuses (2) ist.

## Claims

1. Apparatus (1) for subsequently sealing a flange connection between two insulating housing sections of an insulating housing (2), which is filled with insulating gas, in high-voltage technology, having
- a covering hood (5) which is intended to be mounted on the flange connection of the insulating housing (2) and which, in addition to the flange connection, forms supporting regions (15) by way of which the mounted covering hood (5) is supported on the insulating housing (2),
- sealing means (16) which are arranged on the supporting regions (15),
**characterized in that**
- clamping means (8, 9) for clamping the covering hood (5) are provided on the insulating housing (2), so that a gas-tight clamping fit is provided, and **in that**
- the covering hood (5) has a gas-filling valve (19) with which a sealed-off gas chamber which is delimited by the insulating housing (2) and the covering hood (5) can be filled with a counterpressure gas.

2. Apparatus (1) according to Claim 1,
**characterized in that**
the covering hood (5) is circumferentially closed.

3. Apparatus (1) according to Claim 2,
**characterized in that**
the covering hood (5) has at least two covering hood sections (6, 7) which can be clamped to one another, wherein the sealing means (16) also extend partially between the covering hood sections (6, 7).

4. Apparatus (1) according to one of the preceding claims,
**characterized in that**
the supporting regions (15) are formed on two opposite fastening sides (10) of the covering hood (5) and the covering hood (5) is connected to a side flange (11) by means of fastening means (12) on each of the said fastening sides (10), so that the spatial extent of the sealing means (16) which are arranged in the supporting regions (15) is delimited by the respective side flange (11).

5. Apparatus (1) according to Claim 4,
**characterized in that**
the supporting regions (15) of the fastening sides (10) each delimit a circular contour, wherein a covering section (17), which has a hood-like cross section, is integrally formed on the fastening sides (10).

6. Apparatus (1) according to Claim 4 or 5,
**characterized in that**
the distance between the side flange (11) and the fastening side (10) can be set by the fastening means (12).

7. Apparatus (1) according to one of Claims 4 to 6,
**characterized in that**
the sealing means (16) which are arranged in the supporting regions (15) of the covering hood (5) are of wedge-shaped design when viewed in cross section and taper in the direction of the side of the said sealing means which is averted from the side flange (11).

8. Apparatus (1) according to one of the preceding claims,
**characterized in that**
the supporting regions (15) are designed such that the shape of the said supporting regions complements the sealing means (16) which are arranged in the said supporting regions.

9. Apparatus (1) according to one of the preceding claims,
**characterized in that**
the clamping means are clamping flanges (8) which are formed on covering hood sections (6, 7) of the covering hood (5), so that the covering hood sections (6, 7) can be clamped to one another by the clamping flanges (8).

10. Method for subsequently sealing a leak point (14) of a flange connection between two insulating housing sections of an insulating housing (2), which is filled with insulating gas, in high-voltage technology, in which method an apparatus according to one of Claims 1 to 9 is fastened in a gas-tight manner to the insulating housing (2) by way of the clamping means (8, 9) of the said apparatus, so that a gas chamber is formed between the insulating housing (2) and the covering hood (5), and the gas chamber is then filled with a counterpressure gas by means of a gas-filling valve (19) which is provided in the covering hood (5).

11. Method according to Claim 10,
**characterized in that**
the counterpressure gas is subjected to the action of a pressure which is lower than the pressure of the insulating gas.

12. Method according to Claim 11,
**characterized in that**
the counterpressure gas is subjected to the action of a pressure which is equal to an alarm pressure of the insulating housing (2).

## Revendications

1. Dispositif (1) pour rendre étanche ultérieurement une liaison par bride de deux parties d'un boîtier (2) isolant empli de gaz isolant de la technique de haute tension, comprenant
- une hotte (5) de recouvrement, qui est prévue pour être posée sur la liaison par bride du boîtier (2) isolant et qui forme, à côté de la liaison par bride, des parties (15) d'appui par lesquelles la hotte (5) de recouvrement posée s'appuie sur le boîtier (2) isolant,
- des moyens (16) d'étanchéité disposés sur les parties (15) d' appui,
**caractérisé en ce que**
- il est prévu des moyens (8, 9) de serrage de la hotte (5) de recouvrement sur le boîtier (2) isolant de manière à obtenir un ajustement pressé étanche au gaz et **en ce que** - la hotte (5) de recouvrement a une soupape (19) de remplissage de gaz par laquelle un espace pour du gaz, rendu étanche et délimité par le boîtier (2) isolant et la hotte (5) de recouvrement, peut être rempli d'un gaz de contre-pression.

2. Dispositif (1) suivant la revendication 1,
**caractérisé en ce que**
la hotte (5) de recouvrement est constituée de manière fermée sur le pourtour.

3. Dispositif (1) suivant la revendication 2,
**caractérisé en ce que**
la hotte (5) de recouvrement a au moins deux parties (6, 7) pouvant être bloquées l'une avec l'autre, les moyens (16) d'étanchéité s'étendant en partie également entre les parties (6, 7) de la hotte de recouvrement.

4. Dispositif (1) suivant l'une des revendications précédentes,
**caractérisé en ce que**
les parties (15) d'appui sont formées sur deux côtés (10) de fixation, opposés l'un à l'autre, de la hotte (5) de recouvrement et la hotte (5) de recouvrement est, sur chacun desdits côtés (10) de fixation, reliée à une bride (11) latérale par des moyens (12) de fixation de manière à ce que l'étendue dans l'espace des moyens (16) d'étanchéité mis sur les parties (15) d'appui soit limitée par la bride (11) latérale respective.

5. Dispositif (1) suivant la revendication 4,
**caractérisé en ce que**
les parties (15) d'appui des côtés (10) de fixation délimitent respectivement un contour circulaire, une partie (17) de recouvrement de type en hotte en section transversale étant formée sur les côtés (10) de fixation.

6. Dispositif (1) suivant la revendication 4 ou 5,
**caractérisé en ce que**
la distance entre la bride (11) latérale et le côté (10) de fixation est réglable par les moyens (12) de fixation.

7. Dispositif (1) suivant l'une des revendications 4 à 6,
**caractérisé en ce que**
les moyens (16) d'étanchéité mis dans les parties (15) d'appui de la hotte (5) de recouvrement sont, dans une vue en section transversale, en forme de coin et se rétrécissent en direction de leur côté éloigné de la bride (11) latérale.

8. Dispositif (1) suivant l'une des revendications précédentes,
**caractérisé en ce que**
les parties (15) d'appui sont de forme complémentaire des moyens (16) d'étanchéité qui y sont mis.

9. Dispositif (1) suivant l'une des revendications précédentes,
**caractérisé en ce que**
les moyens de serrage sont des brides (8) de serrage constituées sur des parties (6, 7) de la hotte (5) de recouvrement de manière à ce que les parties (6, 7) de la hotte de recouvrement puissent être bloquées l'une avec l'autre par la bride (8) de serrage.

10. Procédé pour rendre étanche ultérieurement un endroit (14) qui n'est pas étanche d'une liaison par bride de deux parties d'un boîtier (2) isolant empli de gaz isolant de la technique de haute tension, dans lequel on fixe d'une manière étanche au gaz un dispositif suivant l'une des revendications 1 à 9 par son moyen (8, 9) de serrage au boîtier (2) isolant, de manière à former un espace pour du gaz entre le boîtier (2) isolant et la hotte (5) de recouvrement et on emplit ensuite l'espace pour du gaz d'un gaz de contre-pression par une soupape (19) de remplissage de gaz prévue dans la hotte (5) de recouvrement.

11. Procédé suivant la revendication 10,
**caractérisé en ce que** l'on met le gaz de contre-pression sous une pression qui est plus petite que la pression du gaz isolant.

12. Procédé suivant la revendication 11,
**caractérisé en ce que** l'on met le gaz de contre-pression sous une pression qui est égale à une pression d'alerte du boîtier (2) isolant.
